# FASCICULE DE BREVET EUROPEEN

(11) **EP 3 368 172 B1**
(45) Date de publication et mention de la délivrance du brevet: **25.03.2020**
(21) Numéro de dépôt: 15798527.6
(22) Date de dépôt: 30.10.2015
(51) Int. Cl.: B01D 3/00, B01J 19/30, B01J 19/32, B01D 53/18, B01D 3/32

(54) **COLONNE D'ECHANGE DE CHALEUR ET/OU DE MATIERE ENTRE DEUX FLUIDES COMPORTANT UN PLATEAU COLLECTEUR ET DES MOYENS DE MELANGE DU GAZ**
SÄULE FÜR WÄRME- UND/ODER MASSENAUSTAUSCH ZWISCHEN ZWEI FLÜSSIGKEITEN MIT EINER SAMMELSCHALE UND GASMISCHVORRICHTUNG
COLUMN FOR HEAT AND/OR MASS EXCHANGE BETWEEN TWO FLUIDS COMPRISING A COLLECTION TRAY AND GAS MIXING MEANS

(43) Date de publication de la demande: 05.09.2018
(73) Titulaire: IFP Energies nouvelles, 92500 Rueil-Malmaison (FR); Total SA, 92400 Courbevoie (FR); Axens, 92500 Rueil Malmaison (FR)
(72) Inventeur: PERDU, Gauthier, F-92150 Suresnes (FR); SALAIS, Clément, F-75012 Paris (FR); CARLIER, Vincent, F-92600 Asnieres Sur Seine (FR); WEISS, Claire, F-92420 Vaucresson (FR); MAUBERT, Thomas, F-75018 Paris (FR); FOURNIE, Maxime, F-75013 Paris (FR); FOURATI, Manel, F-69200 Venissieux (FR); ALIX, Pascal, F-38150 Roussillon (FR); BEARD, Philippe, F-69230 Saint Genis-laval (FR)
(74) Mandataire: IFP Energies nouvelles
(86) Numéro de dépôt international: PCT/FR2015/052931
(87) Numéro de publication internationale: WO 2017/072416

(56) Documents cités:
- WO-A1-2015/090476
- US-A- 4 314 972
- US-A- 5 403 560
- US-A1- 2015 231 526

## Description

La présente invention concerne le domaine des colonnes de contact gaz/liquide, et plus particulièrement les colonnes offshore (en mer) de traitement de gaz, de captage du CO2, de déshydratation ou encore de distillation.

Les unités de traitement de gaz et/ou de captage du CO2 par lavage aux amines comprennent des colonnes d'absorption et de régénération de fluides, liquides ou gazeux. Ces dernières fonctionnent en écoulement gaz/liquide à contre-courant où à co-courant. Lorsqu'elles sont offshore, les colonnes peuvent être installées sur des bateaux, des barges flottantes ou des plateformes offshore, par exemple de type FPSO (de l'anglais Floating Production, Storage and Offloading qui signifie plateforme de production de stockage et de déchargement), ou du type FLNG (de l'anglais Floating Liquefied Natural Gas qui signifie plateforme de gaz naturel liquéfié). Sur les barges flottantes, peuvent être installées également des colonnes de distillation ou des colonnes de déshydratation.

Les colonnes utilisées dans ces unités (offshore ou terrestres) de traitement de gaz et/ou de capture de CO2 et/ou de distillation et/ou de déshydratation fonctionnent généralement sur le principe d'un échange de matière et/ou de chaleur entre le gaz et le fluide qui circulent dans les colonnes. Classiquement, cette colonne de traitement de gaz comporte plusieurs sections, chaque section comportant un contacteur (appelé également garnissage), et un plateau collecteur, qui est disposé au-dessus du contacteur. Le contacteur gaz/liquide met en contact le gaz et le liquide afin de permettre les échanges de chaleur et/ou de matière. Le plateau collecte le liquide et permet la distribution du liquide sur le contacteur.

Les plateaux distributeurs terrestres standards utilisés dans les colonnes d'absorption/ strippage (de l'anglais stripping) ou encore de distillation sont généralement constitués d'un plateau qui fait à la fois office de collecteur et de distributeur de liquide. Le collecteur de liquide fait aussi office de distributeur de gaz et de convoyeur de liquide. Le fonctionnement de ces plateaux distributeurs est généralement gravitaire. A ce propos, une garde liquide, dont la hauteur dépend de la perte de charge à travers le plateau et du débit de liquide, se forme généralement sur le plateau pour fournir la puissance hydraulique nécessaire au bon fonctionnement du distributeur liquide qui consomme une énergie de pression lors de l'écoulement.

Plusieurs types de plateaux distributeurs gaz/liquide peuvent être utilisés, et peuvent appartenir généralement à trois grandes familles :
- Des distributeurs à cheminées gaz : Une garde liquide s'établit sur toute la section du plateau distributeur, et alimente le lit de contact (garnissage) via des orifices uniformément répartis sur le fond du plateau. Le gaz est acheminé via des cheminées (ex. US 2013/0277868A). La figure 1 montre un plateau distributeur 1 à cheminées classique, muni de cheminées 2 pour le passage du gaz, les cheminées étant couvertes par des « chapeaux » 3 pour éviter le passage de liquide au sein des cheminées gaz (en situation d'écoulement à contre-courant), et des orifices 4 pour le passage de liquide.
- Des distributeurs à caissons liquide : Une garde liquide s'établit sur un ensemble de caissons muni d'orifices d'alimentation, et le gaz est acheminé par l'espace restant (ex. US4909967A).
- Des distributeurs à cheminées liquide : ces distributeurs fonctionnent selon le même principe que le distributeur à cheminées gaz. La différence est que le liquide est distribué via des cheminées pouvant avoir plusieurs hauteurs, permettant ainsi de faire passer une plus large gamme de débit que dans le cas de simples orifices dans le fond de plateau. Le gaz est lui acheminé via des cheminées pouvant avoir une forme cylindrique ou parallélépipédique (ex. US5132055A, US4432913).

Une des conceptions proposées par l'homme de l'art consiste à rassembler le liquide au niveau de l'axe central à la colonne, au milieu du plateau collecteur. Le liquide rassemblé et centralisé est évacué dans une gaine verticale qui relie le plateau collecteur de liquide et le système de distribution par une ou plusieurs conduites verticales relativement longues pour que le système distributeur reste rempli de liquide (dit « en charge »), quelles que soient les conditions de houle rencontrées. La conduite verticale est dimensionnée de manière à ce que la variation de la hauteur de liquide due à un défaut d'horizontalité soit largement inférieure à la hauteur de la conduite de liquide alimentant le système de distribution (US8118284B2, US 2004/0020238 A1). Dans ce cas, le système de distribution de liquide peut être formé par un ou plusieurs arroseurs et le gaz est acheminé par des cheminées situées au niveau du plateau collecteur.

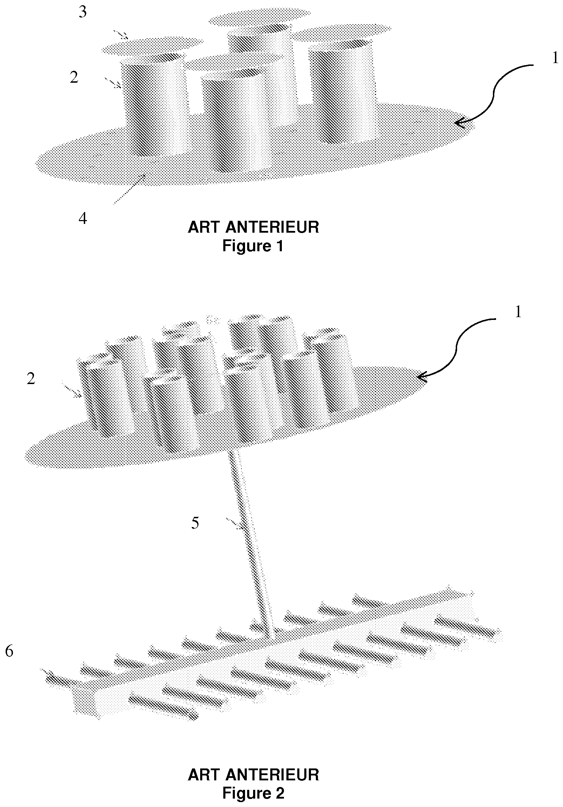

La figure 2 montre un exemple de ce type de plateau distributeur. Le plateau distributeur 1 comporte des cheminées 2 pour le passage du gaz. Le plateau distributeur 1 comporte un système de distribution du liquide, qui comprend une conduite verticale 5 et une pluralité d'arroseurs 6 (tubes horizontaux munis d'orifices ou de buses). D'autres types de systèmes de distribution ont été développés, notamment des systèmes de distribution à spray (au moyen de buses) ou à auges.

Pour des applications offshore, le mouvement de la houle dégrade rapidement la distribution des phases liquide et gaz dans les lits de garnissage. Cette mal-distribution est plus ou moins importante selon le type de garnissage retenu, et selon les périodes et les amplitudes associées au mouvement de la houle. En tout état de cause, elle affecte l'homogénéité de la répartition du liquide et du gaz dans les lits de contact avec création de zones sous alimentées en liquide (dites « sous-mouillées »), et de zones sur alimentées en liquide (dites « sur-mouillées »). Ces mal-distributions du liquide induisent des mal-distribution du gaz, avec là encore des zones sur-alimentées et sous-alimentées en gaz (par rapport à la moyenne). La répartition des zones dépend des conditions (mouvement subis par la colonne, débits, technologie de contact, taille de la colonne, etc.). L'état de l'art montre que la baisse de performance du lit de garnissage dans la colonne est maximum lorsque une zone sur-alimentée en gaz rencontre une zone sous-alimentée en liquide absorbant, ce qui tend à dégrader la performance des colonnes en question via la génération de profils de concentrations marqués.

Dans le cas du traitement de gaz, la mal-distribution hydrodynamique de la phase gaz et de la phase liquide dans un lit de contact entraine donc une absorption plus ou moins performante des espèces à éliminer dans la phase gaz via des profils non homogènes de vitesses, mais aussi via des profils non homogènes de concentrations en espèces chimiques (par exemple en H₂S, CO₂) dans les deux phases. En effet, la quantité d'espèces chimiques transférées entre les phases gaz et liquide dépend en partie de la composition de ces phases et de leurs mises en contact, qui dépend du contacteur et des vitesses du gaz et du liquide. Si les plateaux distributeurs connus sont censés redistribuer le gaz, ils ne se préoccupent pas de le re-mélanger. Ils ne permettent pas d'homogénéiser le profil de concentration en espèces chimiques sur la section du lit de garnissage.

Pour une conception donnée de colonne de traitement de gaz, il semble favorable que le gaz ait une concentration qui soit la plus homogène possible sur toute la section pour obtenir les meilleurs performances et atteindre plus facilement les spécifications en termes de concentrations résiduelles en H₂S et CO₂ en sortie de colonne. Pour des applications terrestres, les systèmes de distribution du liquide et les hauteurs des lits sont dimensionnés pour éviter des mal-distributions de liquide et de gaz trop importantes et ainsi éviter des profils de concentrations notables. Pour des applications offshore, les systèmes évoqués ne re-mélangent pas suffisamment la phase gazeuse.

La demande de brevet WO 2014/070352A1 décrit un système de mélange de gaz entre deux lits de contact. Le système de mélange de gaz est formé par une plaque qui crée une restriction de section de passage de gaz entre deux lits de contact de manière à mélanger ce dernier avant de le redistribuer. Le système de mélange de gaz décrit dans cette demande de brevet ne prévoit pas de distributeur de liquide, et le liquide est collecté en périphérie de la colonne avant d'être introduit directement dans le lit en dessous, ce qui rend la colonne sensible à son inclinaison. De plus, les différents systèmes de mélange du gaz proposés dans ce document ont une forme complexe, dont l'assemblage peut être également complexe.

Le brevet US4820455 concerne un mélange de gaz induit par des ouvertures spécifiques des cheminées de gaz sur le plateau collecteur. Les cheminées situées sur la périphérie envoient le gaz vers le centre de la section et celles situées au centre alimentent en gaz sur 360°. Cette conception peut contribuer àmélanger le gaz mais ce mélange reste partiel en cas de mal-distributions qui s'étendent sur une grande partie de la section, notamment si l'on envisage des hétérogénéités de distribution de gaz concentriques autour de l'axe central de la colonne. L'invention proposée par ce brevet ne paraît pas propice à assurer le re-mélange des zones les plus périphériques avec le gaz circulant autour de l'axe central à la colonne. Le document WO2015/090476A1 divulgue une colonne comprenant un système de répartition de gaz.

Pour pallier ces inconvénients, la présente invention concerne une colonne d'échange de chaleur et/ou de matière entre un gaz et un liquide. La colonne comporte au moins un plateau collecteur, au moins un lit de garnissage, et des moyens de mélange d'un flux de gaz. Selon l'invention, les moyens de mélange d'un flux de gaz sont disposés en-dessous du plateau collecteur et au-dessus du garnissage. Ainsi, la distribution du gaz est améliorée. De plus, l'invention n'influe pas sur la répartition du liquide arrivant sur le plateau collecteur. En outre, des moyens de mélange du flux de gaz sont configurés pour répartir le flux de gaz sur sensiblement la totalité de la section de la colonne, de manière à augmenter le mélange de gaz et à optimiser la répartition du gaz sur le garnissage supérieur.

### Le dispositif selon l'invention

L'invention, selon la revendication 1, concerne une colonne d'échange de chaleur et/ou de matière entre un gaz et un liquide, comportant au moins un plateau collecteur/distributeur, et au moins un garnissage pour la mise en contact des fluides gaz et liquide, ledit plateau collecteur distribuant lesdits fluides sur ledit garnissage, ladite colonne comportant en outre des moyens de mélange d'un flux du gaz. Lesdits moyens de mélange du flux dudit gaz sont disposés en-dessous dudit plateau collecteur et au-dessus dudit garnissage, et lesdits moyens de mélange du flux dudit gaz sont configurés pour répartir le flux de gaz sur sensiblement la totalité de la section de la colonne.

Selon l'invention, ledit plateau collecteur comprend un système de distribution du liquide comportant au moins une conduite d'alimentation en saillie en-dessous du plateau collecteur, lesdits moyens de mélange du flux de gaz comportent des moyens de restriction de la section passage de gaz comportant plusieurs chicanes déterminant un passage privilégié pour le gaz et formées par des plaques planes sensiblement parallèles audit plateau collecteur, lesdites plaques planes étant montées sur ladite d'alimentation.

Autres modes de réalisation de l'invention sont définis dans les revendications 2-6.

En outre, l'invention concerne l'utilisation d'une colonne selon l'une des caractéristiques précédentes pour un procédé de traitement de gaz, de captage de gaz acides, de distillation, de déshydratation ou de séparation d'air.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1, déjà décrite, illustre un plateau collecteur/distributeur selon l'art antérieur.
La figure 2, déjà décrite, illustre un plateau collecteur/distributeur équipé d'un système de distribution secondaire selon l'art antérieur.
La figure 3 illustre un plateau collecteur/distributeur selon un premier mode de réalisation.
Les figures 4a à 4c illustrent trois plateaux collecteurs/distributeurs selon trois variantes du premier mode de réalisation.
La figure 5 illustre un plateau collecteur/distributeur selon un deuxième mode de réalisation.
La figure 6 illustre un plateau collecteur/distributeur selon un troisième mode de réalisation.
La figure 7 illustre une section d'une colonne selon un quatrième mode de réalisation.
La figure 8 illustre un plateau collecteur selon un cinquième mode de réalisation.
Les figures 9a et 9b illustrent deux variantes d'un mode de réalisation de l'invention.
La figure 10 illustre un moyen de mélange du flux de gaz selon une variante mode de réalisation.
La figure 11 illustre un plateau collecteur/distributeur selon un autre mode de réalisation.
La figure 12 illustre un plateau collecteur/distributeur selon une variante de l'autre mode de réalisation.

### Description détaillée de l'invention

La présente invention concerne une colonne d'échange de matière et/ou de chaleur entre un gaz et un liquide. La colonne selon l'invention est adaptée aux écoulements à contre-courant du liquide et du gaz. Toutefois, la colonne selon l'invention peut également convenir aux écoulements à co-courant du liquide et du gaz.

La colonne comporte au moins un plateau collecteur, et au moins un lit de garnissage. Le plateau collecteur permet de former une garde de liquide et permet la distribution du liquide sur le garnissage inférieur. De préférence, la colonne comporte au moins deux lits de garnissage, le plateau collecteur étant situé entre les deux lits de garnissage. Le garnissage, correspond à un contacteur, et permet la mise en contact du liquide et du gaz, afin de permettre les échanges de matière et/ou de chaleur entre les fluides. Selon l'invention, le garnissage peut être du garnissage vrac ou du garnissage structuré. On parle de lit de garnissage pour désigner une section de garnissage. De préférence, la colonne d'échange comporte une pluralité de plateaux collecteurs et une pluralité de lits de garnissage.

Selon l'invention, la colonne comporte en outre des moyens de mélange du flux de gaz. Les moyens de mélange du flux de gaz sont disposés entre un plateau collecteur de liquide et un lit inférieur de garnissage. Les moyens de mélange du flux de gaz sont situés en-dessous du plateau collecteur de liquide et au-dessus du lit de garnissage immédiatement inférieur. Les notions de disposition « en-dessous » et « au-dessus » correspondent au positionnement des différents éléments, lorsque la colonne est en position d'utilisation, c'est-à-dire selon une position verticale.

Les moyens de mélange du flux de gaz sont configurés pour répartir le flux de gaz sur sensiblement la totalité de la section de la colonne. Ainsi, le mélange du gaz et la répartition du gaz sur le garnissage supérieur sont optimisés par rapport aux solutions de l'art antérieur, pour lesquels le flux de gaz est uniquement redistribué en offrant une section de passage minimum qui s'appuie sur le dispositif connu de l'art antérieur de veine fluide contractée. Le phénomène de veine fluide contractée centralise le fluide au travers d'un orifice réduit et le redistribue ensuite dans une section de passage supérieure à l'orifice. Si ce dispositif permet d'assurer une bonne répartition des vitesses de gaz en sortie de l'orifice dans toute la section de la colonne, toutefois le mélange du gaz n'est pas physiquement assuré jusqu'au point d'obtenir une homogénéité de la distribution des compositions de gaz sur la section de la colonne, à la différence de la présente invention qui propose des dispositifs adaptés et spécifiques au mélange du gaz.

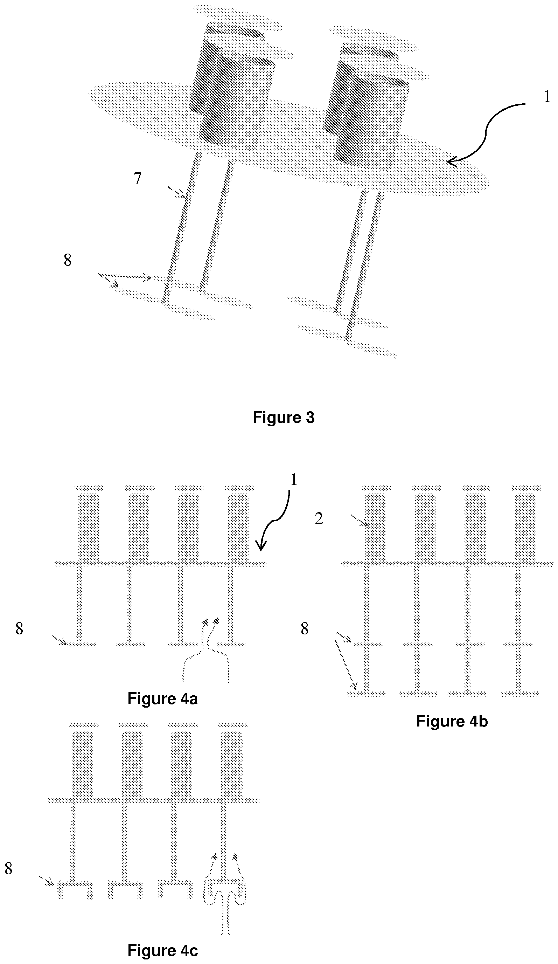

Selon un mode de réalisation, les moyens de mélange du flux de gaz peuvent être disposés sensiblement parallèlement au plateau collecteur, c'est-à-dire que la direction principale des moyens de mélange est sensiblement parallèle au plateau collecteur. Ainsi, dans une position d'utilisation de la colonne, les moyens de mélange du flux de gaz sont sensiblement horizontaux. On note toutefois que les moyens de mélange du flux de gaz peuvent avoir des portions en saillie dans une autre direction, on peut se référer par exemple au mode de réalisation de la figure 4c qui sera décrit plus en détail dans la suite de la description. On appelle sensiblement parallèle, un angle faible avec un plan parallèle au plateau collecteur, c'est-à-dire inférieur à 20°, et de préférence inférieur à 10°, et de manière très préférée inférieur à 5°. Cette orientation quasi-parallèle des moyens de mélange du flux de gaz permet une simplicité de conception et de montage, notamment par rapport à des moyens de mélange du flux de gaz qui sont spécifiquement inclinés par rapport au plateau collecteur. De plus, l'horizontalité des moyens de mélange du flux de gaz permet d'orienter le flux de gaz selon une direction axiale, radiale ou ortho-radiale, et non inclinée, de la colonne.

Les moyens de mélange du flux de gaz permettent de mélanger efficacement le gaz en sortie d'un lit de contact (garnissage) avant de l'introduire dans un deuxième lit de garnissage, dans le but d'obtenir une meilleure distribution et une composition plus homogène du gaz sur la totalité de la section de la colonne, notamment pour les applications offshore. Les moyens de mélange du flux de gaz peuvent être combinés avec des plateaux collecteurs gaz/liquide de l'art antérieur qui permettent de distribuer le gaz et le liquide sur toute la section de colonne. Concrètement, ces moyens de mélange du flux de gaz engendrent la déviation des lignes de courant du gaz, de manière à créer des changements de trajectoire qui favorisent le mélange d'un flux de gaz présentant un profil de concentration en un (ou plusieurs) composé(s) chimique(s) X. Ainsi, on peut homogénéiser la concentration en gaz sur toute la section de la colonne. Ces moyens de mélange du flux de gaz peuvent également amplifier le caractère turbulent de l'écoulement ce qui favorise le mélange. L'agencement des moyens de mélange du flux de gaz en-dessous du plateau collecteur/distributeur permet de conserver une bonne distribution du liquide.

Selon un mode de réalisation, les moyens de mélange du flux de gaz peuvent entraîner le flux de gaz selon une direction principale sensiblement axiale (selon l'axe de la colonne, et a fortiori l'axe du plateau collecteur et des éventuels moyens de distribution). On appelle direction principale du flux, l'orientation du flux de gaz au sein de la colonne engendrée par les moyens de mélange du flux de gaz. Lorsque cette direction principale est sensiblement axiale, les lignes de courant du flux sont principalement axiales, et le flux de gaz n'est pas dévié angulairement par rapport à l'axe de la colonne. Ainsi, le mélange du gaz est assuré.

Alternativement, les moyens de mélange du flux de gaz peuvent entraîner le flux de gaz selon une direction principale sensiblement radiale et/ou ortho-radiale (par rapport à la colonne, et a fortiori par rapport à l'axe du plateau collecteur et aux éventuels moyens de distribution). On appelle direction principale du flux, l'orientation du flux de gaz au sein de la colonne engendrée par les moyens de mélange du flux de gaz. Lorsque cette direction principale est sensiblement radiale ou ortho radiale, les lignes de courant du flux sont principalement radiales, et le flux de gaz n'est pas dévié angulairement au plan horizontal. Ainsi, le mélange du gaz est assuré. De plus, cette conception permet d'uniformiser le profil de(s) concentration(s) dans la direction radiale.

Les moyens de mélange du flux de gaz peuvent prendre plusieurs formes : une ou plusieurs plaque(s) fixe(s) ou mobile(s), garnissage sec, une ou plusieurs pale(s), un ou plusieurs moyen(s) de restriction, une ou plusieurs chicane(s), adaptation de la forme des moyens de distribution...

Le plateau collecteur peut être réalisé selon différentes conceptions de l'art antérieur. Le plateau collecteur/distributeur peut être réalisé notamment selon les conceptions illustrées aux figures 1 et 2, avec par exemple :
- des cheminés 2 de passage du gaz à travers le plateau,
- ces cheminés 2 de passage de gaz à travers le plateau peuvent optionnellement comprendre des chapeaux 3 pour empêcher le liquide de pénétrer dans les cheminées,
- des moyens pour le passage du liquide à travers le plateau, ces moyens peuvent prendre la forme d'orifices 4 et/ou de cheminés pour le passage de liquide (non représentées), et
- un système de distribution, formé par au moins une conduite verticale d'alimentation (également appelée cheminée) 5 en saillie en-dessous du plateau, cette cheminée étant reliée à un ensemble d'arroseurs 6 (qui sont des tubes sensiblement horizontaux munis d'orifices et/ou de buses pour la distribution du liquide).

Selon un premier mode de réalisation, les moyens de mélange du flux de gaz comportent au moins une plaque sensiblement horizontale (parallèle au plateau collecteur). La plaque permet de dévier au moins une partie des lignes de courant du flux du gaz et de limiter la mal-distribution du gaz. En effet, les plaques forment des obstacles à l'écoulement de gaz et permettent cette déviation. En outre, la plaque est configurée pour répartir le flux de gaz sur sensiblement la totalité de la section de la colonne. La plaque peut être montée sur une tige fixée sur le plateau collecteur, vissée démontable, supportée par des poutres, etc. Pour ce mode de réalisation, la direction principale du flux de gaz est sensiblement axiale.

La tige peut être fixée au plateau collecteur par exemple par vissage, soudure, collage ou toute technique analogue.

La plaque peut avoir sensiblement une forme d'un demi-disque, d'une hélice, d'une portion d'hélice, d'une aube, d'un U inversé, ou toute forme analogue. Avantageusement, la plaque peut avoir une surface représentant jusqu'à 80 % de la section de la colonne, de manière à optimiser la répartition du flux de gaz.

La plaque peut être fixe par rapport à la tige, notamment par vissage, soudure, collage ou toute technique analogue. Alternativement, la plaque peut être montée mobile en rotation par rapport à la tige, cela permet d'augmenter l'efficacité du mélange. La rotation de la plaque peut être mise en œuvre par un mécanisme d'entraînement, par exemple par un moteur, ou peut être entraîné directement par le flux gazeux.

Selon une variante de ce mode de réalisation, le plateau collecteur peut comporter plusieurs tiges, sur chacune desquelles peut être montée au moins une plaque. Cette conception permet une déviation plus importante des lignes de courant du flux de gaz, notamment pour les colonnes de plus grand diamètre. Cette configuration permet également une meilleure répartition du flux de gaz sensiblement sur la totalité de la section de la colonne.

Selon une conception particulière, plusieurs plaques, par exemple deux, peuvent être montées sur une tige. Ainsi, il est possible d'optimiser le mélange du flux de gaz.

Pour ce mode de réalisation, le plateau collecteur/distributeur peut comprendre ou non un système de distribution du liquide.

Avantageusement, les plaques peuvent être des plaques métalliques.

La figure 3 représente une variante, non limitative, de ce premier mode de réalisation. Le plateau collecteur/distributeur 1 est du type illustré à la figure 1. Il comprend en outre, des moyens de mélange du flux de gaz, ces moyens sont formés par quatre tiges 7 (sensiblement perpendiculaire au plateau collecteur) supportant chacune une plaque fixe 8 (sensiblement parallèle au plateau collecteur). Les plaques 8 ont sensiblement une forme d'une aube. Alternativement, les plaques 8 peuvent être mobiles en rotation autour des tiges 7.

Les figures 4a à 4c illustrent trois variantes, non limitatives, de ce premier mode de réalisation. La figure 4a correspond schématiquement à la variante de réalisation de la figure 3. La variante de réalisation de la figure 4b correspond à la variante de réalisation de la figure 4a, pour laquelle la seule modification consiste à monter sur chaque tige 7 deux plaques 8 sensiblement parallèles au plateau collecteur 1. La variante de la figure 4c diffère de la variante de la figure 4a par le fait que les plaques 8 ont sensiblement une forme de U inversé, ce qui permet une déviation spécifique des lignes de courant du flux et d'accroître la turbulence. La direction principale de la plaque 8 en forme de U inversé, est parallèle au plateau collecteur 1. Cette déviation est illustrée schématiquement par des flèches. Les variantes des figures 4b et 4c peuvent être combinées.

Selon un autre mode de réalisation, le plateau collecteur comprend un système de distribution du liquide. Le système de distribution peut comprendre au moins une conduite verticale d'alimentation en saillie en-dessous du plateau collecteur. La conduite peut être reliée à un ensemble d'arroseurs (tubes horizontaux munis d'orifices et/ou de buses pour la distribution du liquide). Pour ce mode de réalisation, les moyens de mélange du flux de gaz peuvent comporter au moins une plaque, sensiblement parallèle au plateau collecteur/distributeur. La plaque permet de dévier au moins une partie des lignes de courant du flux du gaz. En effet, les plaques forment des obstacles à l'écoulement de gaz et permettent cette déviation. En outre, la plaque est configurée pour répartir le flux de gaz sur sensiblement la totalité de la section de la colonne. La plaque est montée sur la conduite verticale d'alimentation du système de distribution. La plaque peut être fixe par rapport à la conduite. Alternativement, la plaque peut être construite avec un dispositif qui lui permet d'être mobile en rotation par rapport à la conduite verticale d'alimentation, cela permet d'augmenter l'efficacité du mélange. Pour ce mode de réalisation, la direction principale du flux de gaz est sensiblement axiale.

Selon une variante de ce deuxième mode de réalisation, la plaque peut avoir sensiblement une forme d'une pale. Avantageusement, les moyens de mélange du flux de gaz peuvent comporter plusieurs pales montées sur la conduite verticale d'alimentation du système de distribution.

Selon une variante de ce mode de réalisation, le système de distribution peut comporter plusieurs conduites d'alimentation en saillie en dessous du plateau collecteur, sur chacune desquelles peut être montée au moins une plaque. Cette conception permet une déviation plus importante des lignes de courant du flux de gaz, notamment pour les colonnes de plus grand diamètre.

Avantageusement, les plaques peuvent être des plaques métalliques.

Ce mode de réalisation n'est pas illustré, mais peut correspondre à une disposition des plaques 8 illustrées sur les figures 3, 4a à 4c, sur une ou plusieurs conduites 5 d'un système de distribution tel qu'illustré en figure 2, au lieu d'une tige.

Selon un deuxième mode de réalisation, les moyens de mélange du flux de gaz comportent au moins une plaque rotative, de préférence une pluralité de plaques rotatives. La rotation de la plaque peut être mise en œuvre par un mécanisme d'entraînement, par exemple par un moteur, ou peut être entraîné directement par le flux gazeux. Les plaques rotatives peuvent être sensiblement parallèles au plateau collecteur. Ce mode de réalisation peut-être combiné avec les modes de réalisation précédemment décrits. La rotation des plaques permet une répartition du flux gazeux et son mélange jusqu'à une composition homogène sur la totalité de la section de la colonne.

Selon une conception, les plaques peuvent avoir la forme de pales montées mobiles en rotation autour d'une tige fixée au plateau collecteur/distributeur ou d'une conduite d'alimentation d'un système de distribution.

Avantageusement, les plaques peuvent être métalliques.

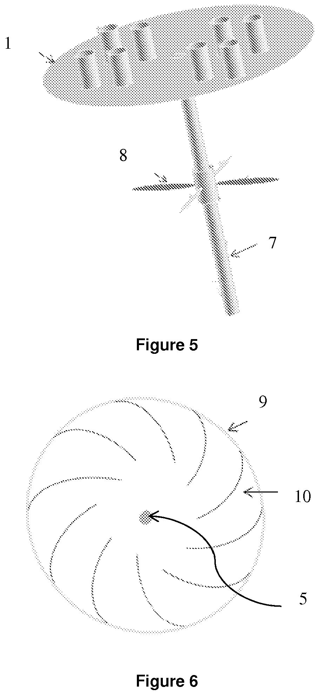

La figure 5 illustre une variante, non limitative, de ce deuxième mode de réalisation. Le plateau collecteur/distributeur 1 comporte une tige 7, sur laquelle est montée mobile en rotation un ensemble comprenant quatre pales 8.

Selon un troisième mode de réalisation, les moyens de mélange du flux de gaz permettent de former un mouvement cyclonique du flux du gaz dans la colonne, qui permet un mélange efficace du flux de gaz. Le mouvement cyclonique se propage sur quasiment toute la section de la colonne, assurant ainsi la répartition du flux de gaz et son mélange jusqu'à une composition homogène .

Selon une conception permettant le mouvement cyclonique du flux du gaz, les moyens de mélange du flux de gaz peuvent s'apparenter à une « turbine » statique qui génère un mouvement cyclonique du gaz. Ainsi, les moyens de mélange du flux du gaz peuvent être formés par des « pales », qui peuvent être profilées et inclinées par rapport à la verticale, et faiblement inclinées par rapport à l'horizontale, et pouvant couvrir toute la section de passage du gaz. Ces pales peuvent être montées sur la virole de la colonne dans l'espace vide en dessous du plateau collecteur/distributeur et au-dessus du garnissage.

Selon une alternative, le mouvement cyclonique du gaz peut être également généré par un système de type hélicoïdal se rapportant à une « vis sans fin » monté sur une tige ou sur une conduite d'un système de distribution secondaire. Le système « vis sans fin » comprend un filetage ayant un angle faible par rapport au plateau collecteur. Le gaz est perturbé dans sa remontée par le dispositif de manière à augmenter le mélange et la répartition de manière homogène sur toute la section de la colonne.

Les pales et le système « vis sans fin » peuvent être métalliques.

Ce mode de réalisation convient aux plateaux collecteurs avec et sans système de distribution du liquide.

La figure 6 illustre une variante, non limitative, de ce troisième mode de réalisation. Cette figure est une vue en coupe d'une section de la colonne à un niveau compris entre le garnissage et le plateau collecteur/distributeur. A ce niveau, le plateau collecteur/distributeur peut comporter une conduite d'alimentation 5 d'un système de distribution. Selon cette variante, la colonne 9 comporte un ensemble de pales 10 profilées et inclinées par rapport à la verticale. Les pales 10 sont réparties sur la totalité de la périphérie de la colonne 9. Les pales 10 génèrent un mouvement cyclonique du gaz.

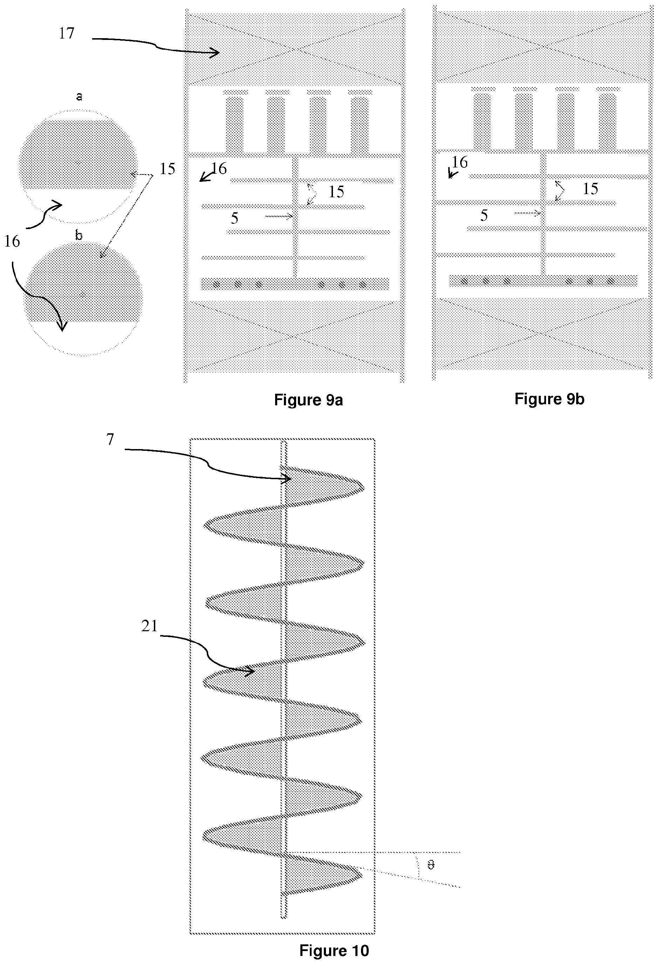

La figure 10 illustre schématiquement, de manière non limitative, un exemple de vis sans fin 21, fixée autour d'une tige 7. La tige 7 est fixée sur un plateau collecteur (non représenté). L'angle θ de la vis sans fin par rapport à l'horizontale est faible, c'est-à-dire inférieur à 20°.

Selon un quatrième mode de réalisation, le plateau collecteur comprend un système de distribution. Le système de distribution comprend au moins une conduite verticale d'alimentation en saillie en-dessous du plateau collecteur/distributeur. La conduite peut être reliée à un ensemble d'arroseurs. Pour ce mode de réalisation, les moyens de mélange du flux de gaz comportent un garnissage, appelé garnissage sec, car ce garnissage est traversé uniquement par le gaz et pas par le liquide. Le garnissage sec permet un mélange du flux de gaz, grâce aux propriétés dispersives des écoulements dans le garnissage, qu'il soit un garnissage vrac ou garnissage structuré. Le lit de garnissage peut être sensiblement parallèle au plateau collecteur. Pour ce mode de réalisation, la direction principale du flux de gaz est sensiblement axiale. En outre, le garnissage sec occupe sensiblement toute la section de la colonne, ce qui assure la répartition du flux de gaz sur cette section et son mélange jusqu'à une composition homogène .

Ce quatrième mode de réalisation s'adapte particulièrement aux colonnes offshore, pour lesquelles le gaz et le liquide ne sont pas mélangés dans l'espace entre deux lits de contact (entre deux sections de garnissage). De plus, le quatrième mode de réalisation présente un encombrement réduit, et permet d'occuper les espaces les plus réduits laissés disponibles entre la zone de collecte et les distributeurs existants.

Dans le cas d'un distributeur terrestre, un garnissage présentant une capacité importante peut, de préférence, être installé en tant que garnissage sec, afin d'éviter les régimes d'engorgement.

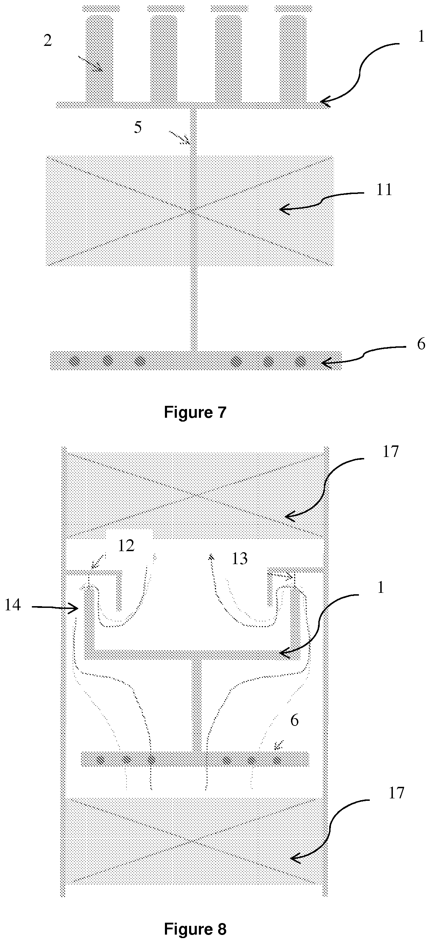

La figure 7 illustre une variante, non limitative, de ce quatrième mode de réalisation. Le plateau collecteur 1 (qui comprend de manière classique des cheminées 2 pour le passage du gaz), comporte un système de distribution comprenant une conduite verticale d'alimentation 5 et des arroseurs 6. Au niveau de la conduite d'alimentation 5, les moyens de mélange du flux du gaz comportent un garnissage sec 11. Seul le gaz traverse le garnissage sec 11. En effet, le liquide ne traverse pas le garnissage sec 11, car il passe directement du plateau collecteur/distributeur 1, aux arroseurs 6.

Conformément à un cinquième mode de réalisation, les moyens de mélange du flux du gaz comportent des moyens de restriction de la section de passage du gaz. Les moyens de restriction dirigent le flux du gaz vers la périphérie de la colonne. Ainsi, le gaz est orienté en un endroit précis, et est donc mélangé de manière efficace. Les moyens de restriction occupent sensiblement la totalité de la section de la colonne. Ainsi, les moyens de restriction permettent une répartition du flux de gaz sur cette section. Les moyens de restriction génèrent un écoulement du flux sensiblement radial (direction principale du flux radiale) en périphérie de la colonne.

Une variante consiste à dispenser le plateau collecteur de cheminées pour le passage de gaz. Le gaz ne peut pas passer sur la section occupée par le collecteur de liquide, et passe sur une section annulaire à la périphérie de la colonne laissée ouverte.

Les moyens de restriction de la section de passage du gaz peuvent être métalliques.

La figure 8 illustre, de manière non limitative, cette variante de réalisation. Cette figure montre un montage du plateau collecteur 1 entre deux lits de contact 17. Le plateau collecteur 1 ne comporte pas de cheminée pour le passage du gaz. Le gaz circulant dans le sens ascendant est acheminé par la section annulaire 14 à la périphérie de la colonne puis est redirigé sur toute la section avant l'entrée dans le lit de garnissage supérieur. Cette redirection est assurée par une plaque (ou couronne) profilée 12 ayant une forme annulaire solidaire avec la virole de la colonne. La déviation des lignes de courant de gaz favorisant le mélange est représentée de façon schématique sur cette figure. Dans cette configuration, le plateau collecteur/distributeur ne peut plus être monté sur une bride au niveau de la virole de la colonne. Un mode de fixation possible consiste à suspendre ce dernier à une plaque annulaire 12 à l'aide de tiges 13. Pour la variante illustrée, le plateau collecteur 1 comporte une conduite reliée à un ensemble d'arroseurs 6.

Conformément à un mode de réalisation de l'invention, les moyens de mélange du flux du gaz comportent des moyens de restriction de la section de passage de gaz. Les moyens de restriction forment au moins plusieurs chicanes, autour lesquelles le gaz passe. Ainsi, le gaz, étant orienté en un endroit précis, est mélangé de manière efficace.

Donc les moyens de restriction forment plusieurs chicanes. Les chicanes déterminent un passage privilégié pour le gaz. Les chicanes sont formées par des plaques planes sensiblement parallèles au plateau collecteur. Les plaques planes sont montées sur une tige ou sur une conduite d'un système de distribution secondaire. Les moyens de restriction occupent sensiblement la totalité de la section de la colonne. Ainsi, les moyens de restriction permettent une répartition du flux de gaz sur cette section. Les moyens de restriction génèrent une direction principale d'écoulement sensiblement radiale.

Selon une variante de ce mode de réalisation, le gaz peut passer des deux côtés des chicanes. Alternativement, le gaz peut passer d'un seul côté des chicanes.

Les passages du gaz peuvent être de dimensions différentes de manière à créer des gradients de vitesse sur la section de la colonne et favoriser le mélange du gaz.

En outre, les chicanes peuvent être également munies d'orifices/ouvertures pour le passage du gaz.

Ce mode de réalisation est réalisé avec un plateau collecteur avec un système de distribution.

Avantageusement, les moyens de restriction de la section de passage du gaz peuvent être métalliques.

Les figures 9a et 9b illustrent deux variantes, non limitatives, de ce mode de réalisation. La partie gauche de la figure illustre, respectivement pour les conceptions des figures 9a et 9b, une section de la colonne au niveau d'une plaque plane d'une chicane.

La variante de la figure 9a comporte une pluralité de plaques planes 15 formant des chicanes. Les plaques planes 15 sont sensiblement parallèles au plateau collecteur 1. Les chicanes laissent des passages 16 pour le passage du gaz. Les plaques planes 15 sont montées sur une conduite 5 d'un système de distribution secondaire. Les plaques planes ne sont pas en contact avec les parois de la colonne, ce qui permet un passage du gaz des deux côtés des plaques planes 15.

La variante de la figure 9b comporte une pluralité de plaques planes 15 formant des chicanes. Les plaques planes 15 sont sensiblement parallèles au plateau collecteur 1. Les chicanes laissent des passages 16 pour le passage du gaz. Les plaques planes sont montées sur une conduite 5 d'un système de distribution secondaire. Les plaques planes sont en contact sur une portion des plaques planes avec les parois de la colonne, ce qui permet un passage du gaz d'un seul côté des plaques planes 15.

Selon un autre mode de réalisation, les moyens de mélange du gaz peuvent être formés par un système de distribution, situé sous le plateau collecteur. Pour ce mode de réalisation, la forme du système de distribution peut permettre d'orienter le flux gazeux, et donc de mélanger le gaz. En variante, le système de distribution peut comprendre au moins un orifice pour le passage du gaz, de manière à l'orienter, et donc à le mélanger. Alternativement, ces deux variantes (forme et orifice) peuvent être combinées de manière à amplifier le mélange. Le distributeur occupe sensiblement la totalité de la section de la colonne, permettant ainsi une répartition du flux de gaz sur cette section. Pour ce mode de réalisation, le flux de gaz a une direction principale d'écoulement axiale.

Le système de distribution peut être basé selon l'exemple de la figure 2, et comprendre au moins une conduite verticale et une pluralité de tubes sensiblement horizontaux. Les tubes assurent la distribution du liquide sur le garnissage inférieur.

Selon une première variante, pour laquelle la forme du système de distribution assure le mélange du gaz, les tubes sont inclinés et sensiblement orientés selon des génératrices d'un cône, dont l'axe est confondu avec l'axe de la colonne. Cette disposition des tubes permet notamment de favoriser l'écoulement turbulent du gaz, assurant ainsi un mélange du gaz entre le garnissage et le plateau collecteur.

Selon une deuxième variante, pour laquelle le mélange est permis par au moins un orifice, au moins un orifice peut être prévu dans une rigole horizontale. L'orifice permet le passage du gaz. De plus l'orientation de l'orifice permet de diriger le gaz selon une direction souhaitée, ce qui permet d'optimiser le mélange. Avantageusement, l'orifice est incliné par rapport à la direction horizontale. Conformément à une première conception de cette variante, l'orifice est incliné du centre vers la périphérie de la colonne. Alternativement, l'orifice peut être incliné de la périphérie vers le centre de la colonne.

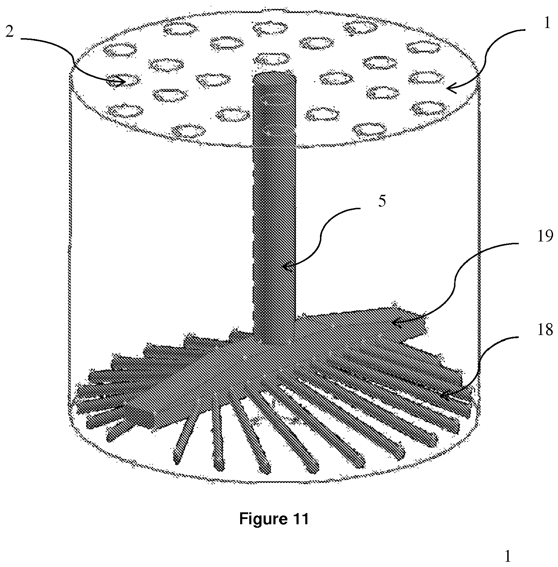

La figure 11 illustre un exemple non limitatif de la première variante de ce mode de réalisation. Sur cette figure, les cheminées 2 pour le passage du gaz sont schématisées par des cercles sur le plateau collecteur 1. Pour cet exemple, le plateau collecteur 1 comporte un système de distribution en saillie en-dessous. Le système de distribution comprend une conduite sensiblement verticale 5. Une pluralité de tubes 18 est reliée à la conduite verticale, par exemple au moyen d'un canal fermé sensiblement horizontal 19. Les tubes 18 sont inclinés par rapport à la direction horizontale. De plus, les tubes 18 sont sensiblement agencés selon des génératrices d'un cône, dont l'axe est confondu avec l'axe de la colonne, et avec l'axe de la conduite 5 dans cet exemple.

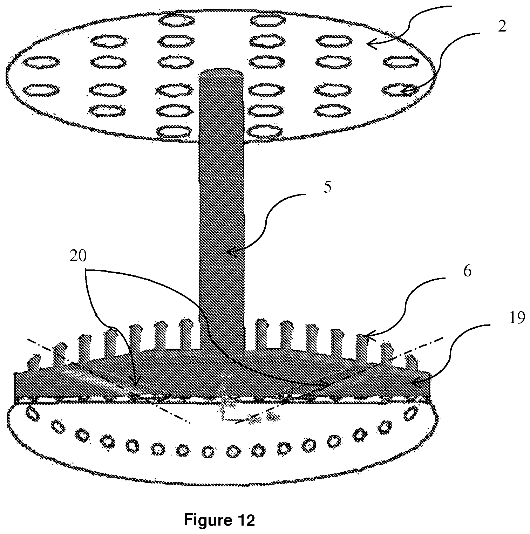

La figure 12 illustre un exemple non limitatif de la deuxième variante de ce mode de réalisation. Sur cette figure, les cheminées 2 pour le passage du gaz sont schématisées par des cercles sur le plateau collecteur 1. Pour cet exemple, le plateau collecteur 1 comporte un système de distribution en saillie en-dessous. Le système de distribution comprend une conduite sensiblement verticale 5. Une pluralité de tubes 6 est reliée à la conduite verticale, au moyen d'un canal fermé 19 sensiblement horizontal. Les tubes 6 au premier plan ne sont pas représentés entièrement, ils sont schématisés par des cercles. Les tubes 6 sont sensiblement horizontaux. De plus, les tubes 6 sont sensiblement perpendiculaires à la rigole 19. Le canal fermé 19 comprend au moins un, ici deux, orifices 20, permettant le passage du gaz du dessous du canal fermé 19 au-dessus du canal fermé 19. Les orifices 20 sont inclinés par rapport à la direction verticale. Les orifices 20 sont orientés du centre vers la périphérie de la colonne.

En variante, l'agencement de tubes 6 de la figure 12 peut être remplacé par l'agencement de tubes 18 de la figure 11, de manière à amplifier la redirection du gaz et donc son mélange entre le garnissage et le plateau collecteur.

La colonne selon l'invention est avantageusement une colonne de lavage aux amines mais elle est adaptée à tout type de solvants.

La colonne selon l'invention peut être utilisée dans des procédés de traitement de gaz, de captage de CO₂, de distillation, de déshydratation ou de séparation de l'air. La colonne selon l'invention peut être utilisée pour des applications offshore (en mer) ou terrestres.

En outre, l'invention concerne une barge flottante offshore, notamment du type FPSO ou FLNG, notamment pour la production et le traitement d'hydrocarbures. La barge comprend une colonne d'échange de matière et/ou de chaleur entre un gaz et un liquide telle que décrite ci-dessus. La colonne peut faire partie d'une unité de traitement de gaz et/ou de captage de CO₂ pour nettoyer des gaz produits (ou fumées). Sur les barges flottantes, peuvent être installées également des colonnes de distillation et/ou des colonnes de déshydratation utilisant ce dispositif.

## Revendications

1. Colonne d'échange de chaleur et/ou de matière entre un gaz et un liquide, comportant :
- au moins un plateau collecteur/distributeur (1),
- au moins un garnissage (17) pour la mise en contact des fluides gaz et liquide, ledit plateau collecteur (1) distribuant lesdits fluides sur ledit garnissage (17),
- des moyens de mélange (15) d'un flux du gaz, **caractérisée en ce que**
lesdits moyens de mélange du flux dudit gaz sont disposés en-dessous dudit plateau collecteur (1) et au-dessus dudit garnissage (17),
lesdits moyens de mélange du flux dudit gaz sont configurés pour répartir le flux de gaz sur la totalité de la section de la colonne,
ledit plateau collecteur (1) comprend un système de distribution du liquide comportant au moins une conduite d'alimentation (5) en saillie en-dessous dudit plateau collecteur (1), lesdits moyens de mélange du flux dudit gaz comportent des moyens de restriction de la section de passage du gaz comportant plusieurs chicanes (15) déterminant un passage privilégié pour le gaz et formées par des plaques planes sensiblement parallèles audit plateau collecteur (1), lesdites plaques planes étant montées sur ladite conduite d'alimentation (5).

2. Colonne selon la revendication 1, dans laquelle lesdits moyens de restriction de la section de passage du gaz occupent sensiblement la totalité de la section de la colonne.

3. Colonne selon la revendication 1 ou la revendication 2, dans laquelle lesdits moyens de restriction de la section de passage du gaz génèrent une direction principale d'écoulement du gaz sensiblement radiale.

4. Colonne selon l'une des revendications précédentes, dans laquelle lesdites chicanes (15) sont configurées pour que le gaz passe des deux côtés desdites chicanes (15).

5. Colonne selon l'une des revendications 1 à 3, dans laquelle lesdites chicanes (15) sont configurées pour que le gaz passe d'un seul côté desdites chicanes (15).

6. Colonne selon l'une des revendications précédentes, dans laquelle les chicanes (15) sont munies d'orifices pour le passage du gaz.

7. Utilisation d'une colonne selon l'une des revendications précédentes pour un procédé de traitement de gaz, de captage de gaz acides, de distillation, de déshydratation ou de séparation d'air.

## Patentansprüche

1. Kolonne für den Wärme- und/oder Stoffaustausch zwischen einem Gas und einer Flüssigkeit, aufweisend:
- mindestens einen Sammel-/Verteilerboden (1),
- mindestens eine Packung (17) zum Inkontaktbringen der Medien Gas und Flüssigkeit, wobei der Sammelboden (1) die Medien auf der Packung (17) verteilt,
- Einrichtungen zum Mischen (15) eines Stroms des Gases,
**dadurch gekennzeichnet, dass**
die Einrichtungen zum Mischen des Stroms des Gases unter dem Sammelboden (1) und über der Packung (17) angeordnet sind,
die Einrichtungen zum Mischen des Stroms des Gases dazu ausgestaltet sind, den Gasstrom über den gesamten Querschnitt der Kolonne zu verteilen,
der Sammelboden (1) ein System zur Verteilung der Flüssigkeit umfasst, das mindestens eine Einspeiseleitung (5) aufweist, die unter dem Sammelboden (1) absteht, die Einrichtungen zum Mischen des Stroms des Gases Einrichtungen zur Verengung des Durchtrittsquerschnitts des Gases aufweisen, die mehrere Schikanen (15) aufweisen, die einen bevorzugten Durchtritt für das Gas bestimmen und aus ebenen Platten gebildet sind, die im Wesentlichen parallel zum Sammelboden (1) sind, wobei die ebenen Platten an der Einspeiseleitung (5) montiert sind.

2. Kolonne nach Anspruch 1, bei der die Einrichtungen zur Verengung des Durchtrittsquerschnitts des Gases im Wesentlichen den gesamten Querschnitt der Kolonne einnehmen.

3. Kolonne nach Anspruch 1 oder Anspruch 2, bei der die Einrichtungen zur Verengung des Durchtrittsquerschnitts des Gases eine im Wesentlichen radiale Hauptströmungsrichtung des Gases erzeugen.

4. Kolonne nach einem der vorhergehenden Ansprüche, bei der die Schikanen (15) so ausgebildet sind, dass das Gas an beiden Seiten der Schikanen (15) durchtritt.

5. Kolonne nach einem der Ansprüche 1 bis 3, bei der die Schikanen (15) so ausgebildet sind, dass das Gas an einer einzigen Seite der Schikanen (15) durchtritt.

6. Kolonne nach einem der vorhergehenden Ansprüche, bei der die Schikanen (15) mit Öffnungen für den Durchtritt des Gases versehen sind.

7. Verwendung einer Kolonne nach einem der vorhergehenden Ansprüche für ein Verfahren zur Gasaufbereitung, zum Abfangen saurer Gase, zur Destillation, zur Dehydrierung oder zur Luftabscheidung.

## Claims

1. Column for exchanging heat and/or material between a gas and a liquid, comprising:
- at least one collector/distributor tray (1),
- at least one packing (17) for placing gas and liquid fluids in contact, said collector tray (1) distributing said fluids over said packing (17),
- mixing means (15) for a gas flow,
**characterized in that**
said mixing means for the flow of said gas are arranged below said collector tray (1) and above said packing (17),
said mixing means for the flow of said gas are configured to distribute the gas flow over all of the section of the column,
said collector tray (1) comprises a distribution system comprising at least one supply conduit (5) protruding below said collector tray (1), said mixing means for the flow of said gas comprise means for restricting the gas passage section comprising several chicanes (15) determining a prioritized passage for the gas and formed by flat plates substantially parallel to said collector plate (1), said flat plates being mounted on said supply conduit (5).

2. Column according to Claim 1, wherein said means for restricting the gas passage section occupy substantially all of the section of the column.

3. Column according to Claim 1 or Claim 2, wherein said means for restricting the gas passage section generate a main direction of flow of the gas that is substantially radial.

4. Column according to one of the preceding claims, wherein said chicanes (15) are configured for the gas to pass on both sides of said chicanes (15).

5. Column according to one of Claims 1 to 3, wherein said chicanes (15) are configured for the gas to pass on only one side of said chicanes (15).

6. Column according to one of the preceding claims, wherein the chicanes (15) are provided with orifices for the passage of the gas.

7. Use of a column as claimed in one of the preceding claims for a gas treatment, acid gas capture, distillation, dehydration or air separation method.
